# EUROPEAN PATENT SPECIFICATION

(11) **EP 3 050 472 B1**
(45) Date of publication and mention of the grant of the patent: **17.05.2017**
(21) Application number: 15202894.0
(22) Date of filing: 29.12.2015
(51) Int. Cl.: A47J 36/14, A47J 27/14, F16K 31/46

(54) **CLOSING DEVICE FOR THE BOTTOM OPENING OF AN INSTITUTIONAL KITCHEN KETTLE**
SCHLIESSVORRICHTUNG FÜR DIE UNTERE ÖFFNUNG EINES GROSSKÜCHENKESSELS
DISPOSITIF DE FERMETURE POUR L'OUVERTURE INFÉRIEURE D'UN CHAUDRON DE CUISINE INSTITUTIONNEL

(30) Priority: 02.01.2015 FI 20155001
(43) Date of publication of application: 03.08.2016
(73) Proprietor: Metos OY AB, 04220 Kerava (FI)
(72) Inventor: LINTUNEN, Paavo, 04430 Järvenpää (FI); KAIKKONEN, Anssi, 00910 Helsinki (FI)
(74) Representative: LEITZINGER OY

(56) References cited:
- DE-U1-202014 100 217
- US-A- 1 765 272
- US-A1- 2013 221 257

## Description

The object in the present invention is a closing device for the bottom opening of an institutional kitchen kettle.

In institutional kitchens, such as hospital and central kitchens, as well as restaurants, bakeries and in the food industry, large amounts of food are produced at a time, generally in institutional kitchen kettles, from which the food that is made is led through an outlet pipe at the bottom of the kettle out of the kettle. However, a problem arises from the fact that in current institutional kitchen kettles, the outlet valve is outside the kettle in the outlet pipe, thus allowing the food being cooked (e.g. potatoes, minced meat, etc.) to pass through the outlet pipe opening at the bottom of the kettle partly also into the outlet pipe, where the food will not be properly cooked and/or may even clog the whole pipe (e.g. rice when it expands).

Institutional kitchen kettles are used, for example, in hot-fill equipment, where hot food is packed in portions into bags which are closed, cooled and can then be stored in a cold place for several days or even weeks in so-called food banks. Especially in these types of arrangements, the hygiene requirements are high since even a small amount of bacteria, such as botulin bacteria, may in the worst case cause a serious food poisoning epidemic.

Therefore, if the bottom opening of the kettle is to be closed while the food is cooking, it must be possible to clean the closing mechanism easily and thoroughly (CIP = cleaning in place). Document DE-U1-20 2014 100 217 shows a closing device for the bottom opening of an institutional kettle according to the preamble of claim 1. The aim of the invention is to provide a simple and easy-to-use closing device for closing the bottom opening of an institutional kitchen kettle for the duration of cooking and which can be cleaned by CIP cleaning, thus ensuring not only even cooking of the food in the institutional kitchen kettle, but also the fulfilment of hygiene requirements during the use and emptying of the institutional kitchen kettle.

This aim is achieved by means of a closing device for the bottom opening of an institutional kitchen kettle according to claim 1. The invention is described in greater detail in the following, with reference to the accompanying drawings, in which:
- Figure 1: shows a basic diagram of an institutional kitchen kettle, where the closing device according to the invention is operable;
- Figure 2: shows one possible form of the closing device according to the invention,
- Figure 3: shows the closing device according to figure 2 in place in the bottom opening of the kettle, and
- Figure 4: shows one possible form of the arc valve used in connection with the closing device, and
- Figure 5: shows another possible form of the arc valve used in connection with the closing device

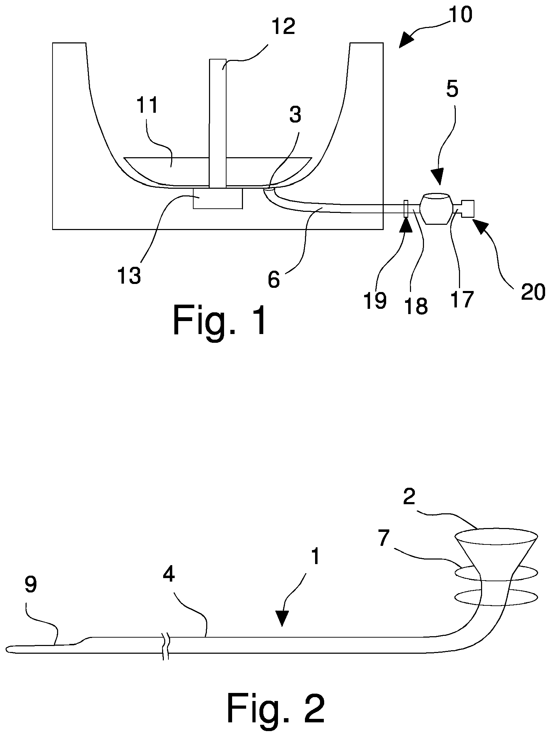

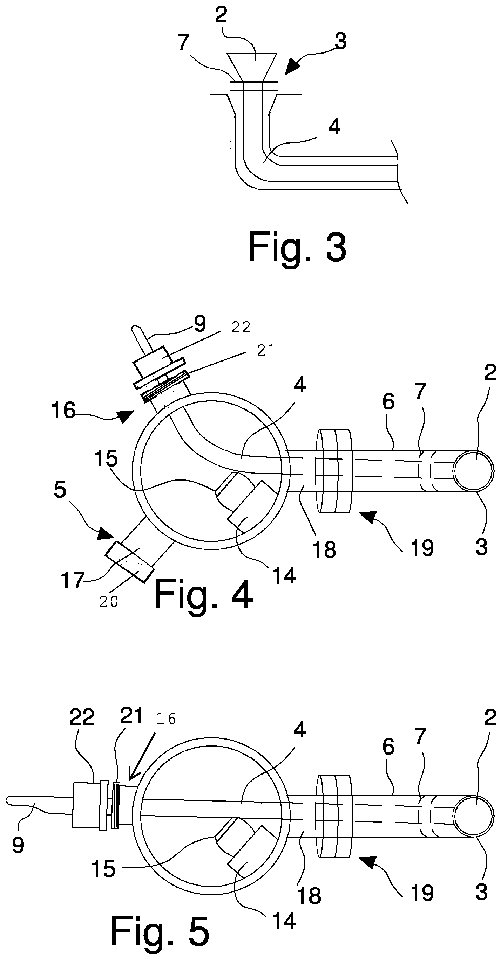

Figure 1 shows an institutional kitchen kettle 10, where there is a mixer shaft 12 powered by a motor 13, to which a mixer 11 is attached. Inside the kettle there is a bottom opening 3, from where an outlet pipe 6 extends outside the kettle. To the outlet pipe has been attached with a flange joint 19 the inlet 18 of the valve 5. The valve 5 is preferably an arc valve, and some of its possible forms are specified in figures 4 and 5. To the end of the outlet 17 of the valve 5 is attached a joint 20, which can be e.g. a thread joint, to which can be attached, for example, a hose connected to the pump of a food portioning device (not shown). This kind of institutional kitchen kettle can be used e.g. for hot-fill packaging.

The problem with using this kind of kettle has been that in the worst case scenario, the food can clog the whole outlet channel, causing a considerable amount of extra work and delay in cooking the food when it needs to be opened. The risk of burns when trying to open a kettle equipped with e.g. a flap valve is also considerable. For example, cleaning a clog of rice in the pipe from the outside, when suddenly hot food may splash from the valve. The rice clog may not, however, always be completely dissolved, in which case uncooked rice keeps continuously travelling past the rice clog with the cooked food.

By using the closing device according to the invention, this problem can be eliminated in a simple and efficient manner. The closing device 1 according to the invention includes a food-grade elastic plug 2, to which a shaft 4 is attached, also preferably of the same material and it forms a uniform structure with the plug 2. The other end of the shaft 4, remote from the plug 2, is preferably shaped into a narrowed end 9. To the shaft 4 has preferably been formed guiding means 7, which may include round flange units, which support the shaft so that the plug 2 settles into the correct position in the bottom opening 3.

The closing device 1 has been shaped so that its shaft 4 is so long that it extends through the valve chamber 5 and outside the valve so that the operator can grab the farthest end of the shaft in order to pull the plug 2 from the bottom opening 3 through to the outlet pipe 6 and further through the valve chamber 5.

Instead of a shaft 4 integrally attached to the plug, a separate pulling device may also be used, such as a cord, a chain or a belt that has been attached to the plug 2 so that the plug 2 can be pulled through the bottom opening 3 through to the outlet pipe 6 and finally completely out of the valve.

In figure 4 shown as a basic diagram is one form of the arc valve 5 as a 3-way valve. As according to figure 4, the arc valve 5 has an inlet 18 and the outlets 16 and 17. The outlet 16 is meant for receiving the closing device 1 and the outlet 17 for directing food out of the outlet pipe 6 to a food portioning device (not shown) during the food emptying stage of the kettle 10. During the food cooking stage, the closing device 1 is fitted so that the plug 2 shuts the bottom opening 3 of the kettle and the tip of the shaft 9 protrudes from outlet 16 of the valve 5. The closing device staying in place is ensured by turning the valve's 5 shutter 14 supported by the guide 15 so that it settles against the closing device's shaft 4. When the food is ready to be carried to the food portioning device, the valve's shutter 14 is turned away from the shaft 4 into a position that closes the outlet 17 and the closing device 1 is pulled outside from the end 9 so that the plug 2 moves through the bottom opening 3 and the pipe 6 and onward through the inlet 18 of the valve 5 to the valve chamber and to the valve outlet 16, settling in a position that closes the outlet 16. The elasticity of the plug 2 enables it to reshape itself while being pulled out so that it can pass through the bottom opening 3 and the outlet pipe 6 as well as the valve chamber. After this, the valve's shutter 14 is turned in the valve chamber into a position that closes the outlet 16, at which point the food coming from the kettle can pass through the port 17 to the food portioning device. In the end the closing device 1 can be completely pulled out of the valve and taken to be cleaned. The outlet 16 is preferably equipped with outer thread 21, which has preferably been equipped with a cap 22, which has a hole for closing device's 1 shaft 4 to pass through and gasket apparatus, e.g. an O ring gasket, which seals the shaft 4.

In figure 5 shown as a basic diagram is one other possible form of the arc valve 5 as a 2-way valve. It has the inlet 18 and one outlet 16, which receives the closing device's 1 plug 2 when the closing device is being pulled outside by the end 9 of the shaft 4 into the outlet pipe and further through the valve chamber. The inlet 18 and the outlet 16 are preferably diametrically opposite of one another, so that the movement of the closing device 1 inside the valve chamber is as straightforward as possible. The plug 2 closes the outlet 16 and the valve's shutter 14 is turned in the valve chamber into a position that closes the outlet 16. The outlet 16 is preferably equipped with an outer thread 21 for attaching a hose or a pipe.

To the end of the outlet 16 is preferably placed a cap 22 on the outer thread 21 with a hole for the shaft 4 of the closing device 1 to pass through and gasket apparatus, e.g. an O ring gasket, which seals the shaft 4. When the valve's shutter 14 has been turned into a position that closes the outlet 16, the cap 22 is twisted away and the closing device 1 is pulled completely out of the valve 5 and after that to the end of the outlet's 16 thread 21 is attached a hose or a pipe (not shown) that leads to a portioning device.

A kettle equipped with a 2- or 3-way arc valve as shown in figures 4 and 5, with an outlet pipe and an arc valve, can be cleaned on site according to the requirements of CIP cleaning.

The invention has been described above as being used in connection with a 2- or 3-way arc valve, but it is also applicable for use with e.g. a 2- or 3-way ball valve.

Reference list:
- 1: Closing device
- 2: Plug
- 3: Kettle's bottom opening
- 4: Closing device's shaft
- 5: Valve
- 6: Kettle's outlet pipe
- 7: Closing device's guiding means
- 9: Closing device's narrow end
- 10: Kettle
- 11: Mixer
- 12: Mixer's shaft
- 13: Mixer's motor
- 14: Arc valve's shutter
- 15: Arc valve's guide
- 16, 17: Arc valve's outlet
- 18: Arc valve's inlet
- 19: Flange joint
- 20: Outlet joint
- 21: Outlet's outer thread
- 22: Cap

## Claims

1. Closing device (1) for the bottom opening (3) of an institutional kitchen kettle, the bottom opening of which leads to an outlet pipe (6) where there is a valve (5) outside the kettle for opening and closing the outlet pipe to allow the food inside the kettle to be directed into the desired destination, wherein the closing device (1) comprises a plug (2) that has been fitted to shut the bottom opening (3) when it is installed in place, said plug (2) being equipped with an elongated shaft (4) or a pulling device that extends from the bottom opening said closing device being **characterized in that** the plug is made of an elastic food-grade material and **in that** the shaft (4) or pulling device extends to inside the outlet pipe (6) and beyond the valve (5) so that the plug (2) can be pulled using either the shaft (4) or the pulling device to the outlet pipe (6) for opening the bottom opening (3) and further through the valve (5).

2. A closing device (1) as claimed in claim 1, **characterised in that** the shaft (4) is made of the same material as the plug (2), as a singular construction with the plug (2).

3. A closing device (1) as claimed in claim 2, **characterised in that** the shaft (4) is equipped with guiding means (7) that holds the plug (2) in the correct position to shut the bottom opening (3) tightly.

4. A closing device (1) as claimed in claim 1, **characterised in that** the shaft encompasses a separate pulling device attached to the plug.

5. A closing device as claimed in any of the claims 1 to 4, for use in an institutional kitchen kettle with a bottom opening that leads to an outlet pipe, which is equipped with a 2-way arc valve outside the kettle.

6. A closing device as claimed in any of the claims 1 to 4, for use in an institutional kitchen kettle with a bottom opening that leads to an outlet pipe, which is equipped with a 3-way arc valve outside the kettle.

7. A closing device as claimed in any of the claims 1 to 4, for use in an institutional kitchen kettle with a bottom opening that leads to an outlet pipe, which is equipped with a 2- or 3-way ball valve outside the kettle.

## Patentansprüche

1. Schließvorrichtung (1) für die Bodenöffnung (3) eines Großküchenkessels, wobei die Bodenöffnung zu einem Auslassrohr (6) mit einem Ventil (5) außerhalb des Kessels zum Öffnen und Schließen des Auslassrohrs führt, damit die Nahrungsmittel innerhalb des Kessels in das gewünschte Ziel geleitet werden können,
wobei die Schließvorrichtung (1) einen Stopfen (2) umfasst, der angepasst ist, um die Bodenöffnung (3) zu schließen, wenn er an der Stelle installiert ist, wobei der Stopfen (2) mit einem länglichen Schaft (4) oder einer Zugvorrichtung ausgestattet ist, die sich von der Bodenöffnung erstrecken,
wobei die Schließvorrichtung **dadurch gekennzeichnet ist, dass** der Stopfen aus einem elastischen Material in Lebensmittelqualität besteht und sich der Schaft (4) oder die Zugvorrichtung zur Innenseite des Auslassrohrs (6) und über das Ventil (5) hinaus derart erstrecken, dass der Stopfen (2) mittels des Schafts (4) oder der Zugvorrichtung zum Auslassrohr (6) zum Öffnen der Bodenöffnung (3) und weiter durch das Ventil (5) gezogen werden kann.

2. Schließvorrichtung (1) nach Anspruch 1, **dadurch gekennzeichnet, dass** der Schaft (4) aus dem gleichen Material wie der Stopfen (2) als einstückige Ausbildung mit dem Stopfen (2) besteht.

3. Schließvorrichtung (1) nach Anspruch 2, **dadurch gekennzeichnet, dass** der Schaft (4) mit Führungsmitteln (7) ausgestattet ist, die den Stopfen (2) in der richtigen Position zum festen Schließen der Bodenöffnung (3) halten.

4. Schließvorrichtung (1) nach Anspruch 1, **dadurch gekennzeichnet, dass** der Schaft eine getrennte Zugvorrichtung, die an dem Stopfen angebracht ist, umfasst.

5. Schließvorrichtung nach einem der Ansprüche 1 bis 4 zur Verwendung in einem Großküchenkessel mit einer Bodenöffnung, die zu einem Auslassrohr führt, das mit einem 2-Wege-Bogenventil außerhalb des Kessels ausgestattet ist.

6. Schließvorrichtung nach einem der Ansprüche 1 bis 4 zur Verwendung in einem Großküchenkessel mit einer Bodenöffnung, die zu einem Auslassrohr führt, das mit einem 3-Wege-Bogenventil außerhalb des Kessels ausgestattet ist.

7. Schließvorrichtung nach einem der Ansprüche 1 bis 4 zur Verwendung in einem Großküchenkessel mit einer Bodenöffnung, die zu einem Auslassrohr führt, das mit einem 2- oder 3-Wege-Kugelventil außerhalb des Kessels ausgestattet ist.

## Revendications

1. Dispositif de fermeture (1) pour l'ouverture inférieure (3) d'une marmite de cuisine institutionnelle dont l'ouverture inférieure mène vers un tuyau de sortie (6) où il y a une soupape (5) à l'extérieur de la marmite pour ouvrir et fermer le tuyau de sortie pour permettre à la nourriture à l'intérieur de la marmite d'être envoyée vers la destination souhaitée,
dans lequel le dispositif de fermeture (1) comprend un bouchon (2) qui a été ajusté pour fermer l'ouverture inférieure (3) lorsqu'il est mis en place, ledit bouchon (2) étant doté d'une tige allongée (4) ou d'un dispositif pour tirer qui s'étend à partir de l'ouverture inférieure,
ledit dispositif de fermeture étant **caractérisé en ce que** le bouchon est formé par un matériau élastique de qualité alimentaire et **en ce que** la tige (4) ou le dispositif pour tirer s'étend vers l'intérieur du tuyau de sortie (6) et au-delà de la soupape (5) de manière à ce que le bouchon (2) puisse être tiré, en utilisant la tige (4) ou le dispositif pour tirer, vers le tuyau de sortie (6) pour ouvrir l'ouverture inférieure (3), et plus loin via la soupape (5).

2. Dispositif de fermeture (1) tel que revendiqué par la revendication 1, **caractérisé en ce que** la tige (4) est formée par le même matériau que le bouchon (2) en tant que construction singulière avec le bouchon (2).

3. Dispositif de fermeture (1) tel que revendiqué par la revendication 2, **caractérisé en ce que** la tige (4) est dotée d'un moyen de guidage (7) qui maintient le bouchon (2) dans la position correcte pour fermer hermétiquement l'ouverture inférieure (3).

4. Dispositif de fermeture (1) tel que revendiqué par la revendication 1, **caractérisé en ce que** la tige comprend un dispositif pour tirer séparé attaché au bouchon.

5. Dispositif de fermeture tel que revendiqué par l'une quelconque des revendications 1 à 4, pour l'utilisation avec une marmite de cuisine institutionnelle avec une ouverture inférieure qui mène vers un tuyau de sortie, lequel est doté d'une soupape 2 voies à arc à l'extérieur de la marmite.

6. Dispositif de fermeture tel que revendiqué par l'une quelconque des revendications 1 à 4, pour l'utilisation dans une marmite de cuisine institutionnelle avec une ouverture inférieure qui mène vers un tuyau de sortie, lequel est doté d'une soupape 3 voies à arc à l'extérieur de la marmite.

7. Dispositif de fermeture tel que revendiqué par l'une quelconque des revendications 1 à 4, pour l'utilisation dans une marmite de cuisine institutionnelle avec une ouverture inférieure qui mène vers un tuyau de sortie, lequel est doté d'une soupape 2 voies ou 3 voies à bille à l'extérieur de la marmite.
